# EUROPEAN PATENT APPLICATION

(11) **EP 4 113 152 A1**
(43) Date of publication of application: **04.01.2023**
(21) Application number: 21761597.0
(22) Date of filing: 01.03.2021
(51) Int. Cl.: G01S 5/02, G01S 5/18, H04B 11/00

(54) **DEVICE ARRANGEMENT METHOD, ANCHOR TERMINAL ARRANGEMENT METHOD, ARRANGEMENT CANDIDATE OUTPUT SYSTEM, AND ANCHOR TERMINAL REGISTRATION SYSTEM**

(30) Priority: 28.02.2020 JP 2020034150
(71) Applicant: Daikin Industries, Ltd., Osaka-shi, Osaka 530-8323 (JP)
(72) Inventor: FUJIWARA, Masayuki, Osaka-shi, Osaka 530-8323 (JP)
(74) Representative: Global IP Europe Patentanwaltskanzlei
(86) International application number: PCT/JP2021/007705
(87) International publication number: WO 2021/172587

(57) **Abstract**

It may be difficult to specify the arrangement of devices from the information about the distance based on a wireless communication of the devices and the information on the drawing of a space. A method for arranging devices (10) is a method for arranging n devices (10) whose arrangement is specified by an arrangement specifying system (1). The arrangement specifying system (1) specifies the correspondence of the arrangement of the n devices (10) on the drawing based on the information about the distance and drawing information (β). The information about the distance is information about the distance of any two devices (10) among the n devices (10). The drawing information (β) is information indicating the arrangement of the n devices (10). According to the method for arranging the devices (10), the n devices (10) are arranged such that there is no symmetric axis and/or no symmetric point in the arrangement of the n devices (10).

## Description

### TECHNICAL FIELD

The present disclosure relates to a method for arranging devices, a method for arranging an anchor terminal, an arrangement candidate output system, and an anchor terminal registration system.

### BACKGROUND ART

Conventionally, as in Patent Literature 1 (Japanese Unexamined Patent Publication No. 2017-32469), there is a system that specifies the arrangement of a plurality of devices installed in a space. In such a system, the arrangement of the devices is specified from the information about the distance based on a wireless communication of the devices and the information on a drawing of the space.

### SUMMARY OF INVENTION

### < Technical Problem >

However, it may be difficult to specify the arrangement of the devices from the information about the distance based on the wireless communication of the devices and the information on the drawing of the space.

### < Solution to Problem >

A method for arranging devices according to a first aspect is a method for arranging n devices whose arrangement is specified by an arrangement specifying system. The arrangement specifying system specifies a correspondence of an arrangement of the n devices on a drawing based on information about a distance and drawing information. The information about the distance is information about a distance of any two devices among the n devices arranged with a predetermined arrangement. The drawing information is information indicating the arrangement of the n devices. The method for arranging the devices includes arranging the n devices such that there is no symmetric axis and/or no symmetric point in the arrangement of the n devices.

Thus, it is possible to easily specify the arrangement of the devices.

A method for arranging an anchor terminal according to a second aspect is a method for arranging used for an arrangement specifying system that specifies a correspondence of an arrangement of n devices on a drawing based on information about a distance and drawing information. The information about the distance is information about a distance of the anchor terminal and any two devices of the n devices. The drawing information indicates an arrangement of the anchor terminal and the n devices. The anchor terminal is arranged with an arrangement such that there is no symmetric axis and/or no symmetric point in the arrangement of the anchor terminal and the n devices.

This contributes to easily specifying the arrangement of the devices.

A method for arranging the anchor terminal according to a third aspect is the method for arranging according to the second aspect, and the anchor terminal and the n devices are capable of performing a wireless communication or ultrasonic communication with each other. The information about the distance includes information based on a communication intensity and a communication time by the wireless communication or the ultrasonic communication and a direction in which a radio wave or a sound wave arrives.

An arrangement candidate output system according to a fourth aspect outputs an arrangement candidate for arranging the anchor terminal. The arrangement candidate output system is used for an arrangement specifying system. The arrangement specifying system specifies a correspondence of an arrangement of n devices on a drawing based on information about a distance and drawing information. The information about the distance is information about a distance of an anchor terminal and any two devices of the n devices. The drawing information indicates an arrangement of the anchor terminal and the n devices. The arrangement candidate output system includes a device arrangement acquisition unit and a terminal arrangement candidate output unit. The device arrangement acquisition unit acquires device arrangement information indicating the arrangement of the n devices. The terminal arrangement candidate output unit outputs a candidate for arranging the anchor terminal such that there is no symmetric axis and/or no symmetric point in the arrangement of the anchor terminal and the n devices based on the device arrangement information.

This contributes to easily specifying the arrangement of the devices.

An anchor terminal registration system according to a fifth aspect registers an anchor terminal used for an arrangement specifying system that specifies a correspondence of an arrangement of n devices on a drawing based on information about a distance and drawing information. The information about the distance is information about a distance of an anchor terminal and any two devices of the n devices arranged with a predetermined arrangement. The drawing information indicates an arrangement of the anchor terminal and the n devices. The anchor terminal registration system includes a device arrangement acquisition unit, a terminal arrangement acquisition unit, and a terminal arrangement registration unit. The device arrangement acquisition unit acquires device arrangement information indicating the arrangement of the n devices. The terminal arrangement acquisition unit adds the arrangement of the anchor terminal to the device arrangement information acquired by the device arrangement acquisition unit. The terminal arrangement registration unit registers the anchor terminal added by the terminal arrangement acquisition unit in the arrangement specifying system.

This contributes to easily specifying the arrangement of the devices.

An anchor terminal registration system according to a sixth aspect is the system according to the fifth aspect and further includes an arrangement notification unit. The arrangement notification unit notifies a user when there is a symmetric axis and/or a symmetric point in the arrangement of the n devices and the anchor terminal including the arrangement of the devices and the arrangement of the anchor terminal registered by the terminal arrangement registration unit.

An anchor terminal registration system according to a seventh aspect is the system according to the fifth aspect and further includes an arrangement notification unit. The arrangement notification unit notifies a user when there is no symmetric axis and/or no symmetric point in the arrangement of the n devices and the anchor terminal including the arrangement of the devices and the arrangement of the anchor terminal registered by the terminal arrangement registration unit.

An arrangement specifying system according to an eighth aspect includes n (n ≥ 3) devices, an acquisition unit, and a specifying unit. The n devices are arranged such that there is no symmetric axis and/or no symmetric point. The acquisition unit acquires information about a distance of the any two devices among the n devices and drawing information indicating an arrangement of the n devices. The specifying unit specifies the arrangement of the n devices based on the information about the distance of the devices acquired by the acquisition unit and the drawing information indicating the arrangement of the n devices.

### BRIEF DESCRIPTION OF DRAWINGS

FIG. 1 is a schematic diagram illustrating an arrangement specifying system.
FIG. 2 illustrates an example of drawing information indicating a space.
FIG. 3 is a schematic diagram illustrating an air conditioner.
FIG. 4 is a schematic diagram illustrating an anchor terminal.
FIG. 5 is a schematic diagram illustrating a management device and a terminal device.
FIG. 6 illustrates an example of device arrangement information.
FIG. 7 is a diagram illustrating an example of an arrangement candidate for the anchor terminal.
FIG. 8 is a flowchart illustrating a flow of a process in the arrangement specifying system.

### DESCRIPTION OF EMBODIMENTS

### (1) Overall Configuration

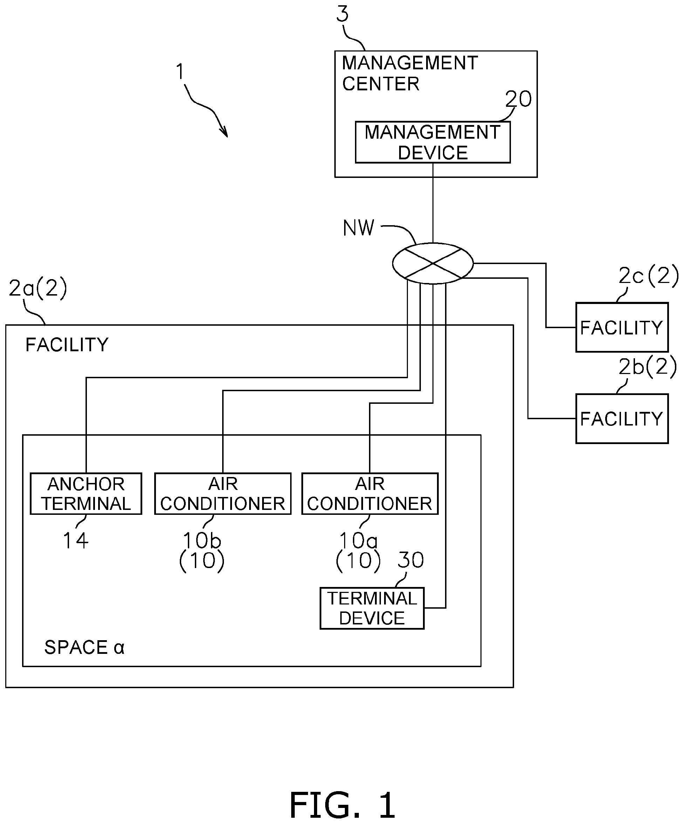

FIG. 1 is a schematic diagram illustrating a configuration of an arrangement specifying system 1 according to an embodiment of the present disclosure. In the description below, when a common description is given for a plurality of devices having a similar function, the same reference numeral is given for the description. When one device is distinguished from a plurality of devices having a similar function for the description, a lower-case letter is added as an index for the description. For example, as air conditioners 10a and 10b are devices having a similar function, they are described as air conditioners 10 for the common description. Although indexes are used for convenience of description, they denote optional numbers, and the numerical quantities are not limited thereto.

The arrangement specifying system 1 is a system that specifies the arrangement of a plurality of devices. The arrangement specifying system 1 includes a plurality of devices, an anchor terminal 14, a management device 20, and a terminal device (an arrangement candidate output system, an anchor terminal registration system) 30. An "air conditioner" that performs cooling and heating of a target space (space α) will be described below as an example of a specifying target of the arrangement specifying system 1 according to the present embodiment. However, the specifying target of the arrangement specifying system 1 according to the present embodiment is not limited to air conditioners. Furthermore, "specifying the arrangement of a plurality of devices" refers to associating the arrangement (position) of each of the devices in the target space with unique identification information assigned to each device.

The management device 20 is installed in, for example, a management center 3. A large number of facilities 2 (2a to 2c) are present in a control area of the management center 3. The facility 2 is, for example, an office building, commercial building, condominium, or the like. In the facility 2, there is the space α that is, for example, a room, tenant, area, or the like.

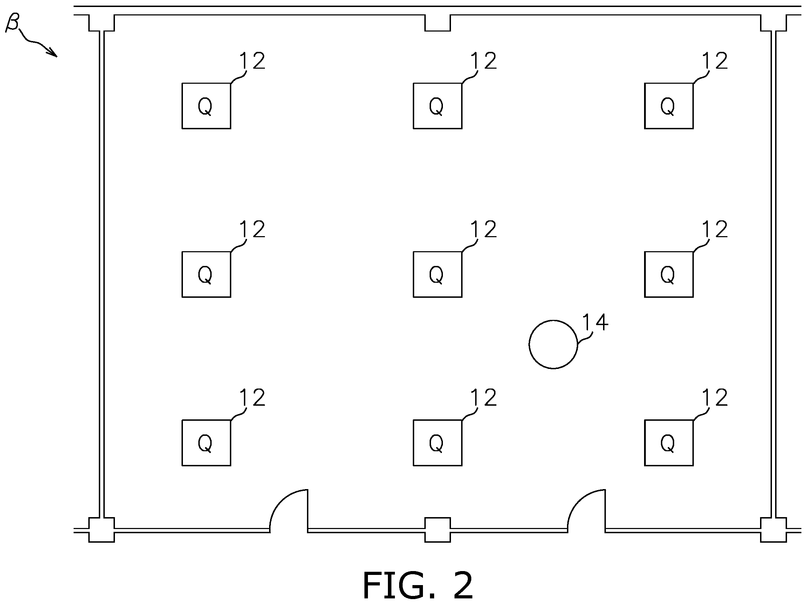

Indoor units 12 of the air conditioners 10 as devices are installed at respective installation positions Q illustrated in FIG. 2 in the space α. Furthermore, FIG. 2 illustrates drawing information β indicating the space α, in which at least the installation positions Q of the air conditioners 10 are illustrated on a plan view of the space α. Further, the arrangement of the anchor terminal 14 illustrated in FIG. 2 shows the arrangement of the anchor terminal 14 registered by a terminal arrangement registration unit 335 for convenience of explanation, and the arrangement of the anchor terminal 14 illustrated in FIG. 2 is not included in the drawing information β. In the space α, the installation positions Q are provided, for example, with substantially right-left symmetry and up-down symmetry. When the air conditioners 10 are installed at the respective installation positions Q, a serviceperson, or the like, uses the terminal device 30 to perform an arrangement registration work to register the arrangement and the identification information of the air conditioners 10 in association with each other in the management device 20. The management device 20 starts to manage the air conditioner 10 after the arrangement and the identification information of the air conditioners 10 are registered in association with each other.

The air conditioner 10, the management device 20, and the terminal device 30 are connected to each other via a communication network NW. Further, the communication network NW is, for example, the Internet and includes a WAN (Wide Area Network) across a plurality of properties. The management device 20 transmits and receives various types of information to and from the air conditioner 10 and the terminal device 30 via the communication network NW to register the arrangement of the indoor unit 12 of the air conditioner 10 and manage the air conditioner 10. Moreover, the anchor terminal 14, the air conditioner 10, the management device 20, and the terminal device 30 may be connected to each other via the communication network NW in the same manner.

### (2) Device

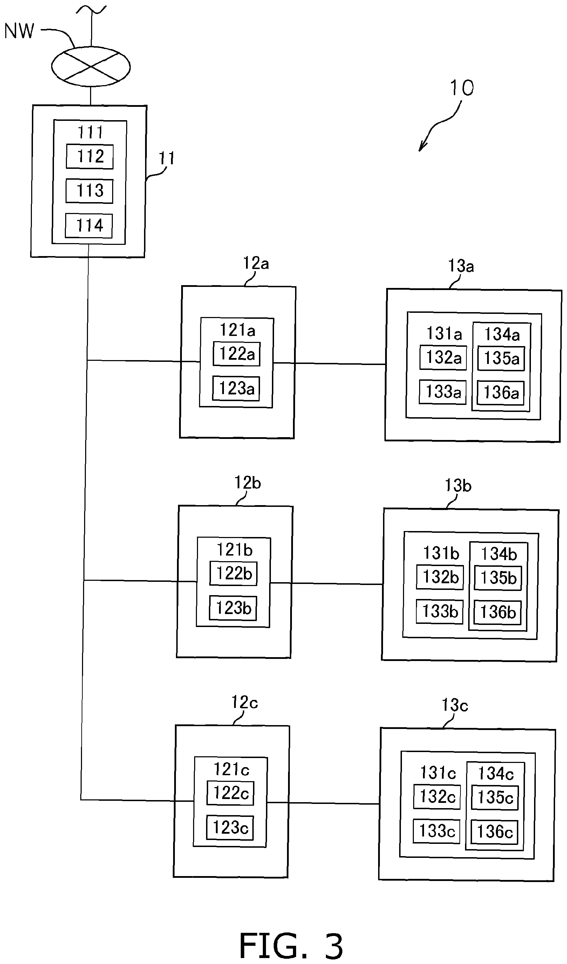

FIG. 3 is a schematic diagram illustrating a configuration of the air conditioner 10 according to the present embodiment. The air conditioner 10 includes a refrigerant circuit including a compressor, a heat exchanger, and the like, which are not illustrated. The air conditioner 10 includes an outdoor unit 11, the indoor units 12 (12a to 12c), and a plurality of short-range wireless communication devices 13 (13a to 13c). The outdoor unit 11 is a device functioning as a heat source of the refrigerant circuit and is installed, for example, on a rooftop, in a basement, or the like, of the facility 2. The indoor unit 12 performs cooling and heating of the space α based on an operation signal input from an operation panel, a remote controller, or the like, installed in a room. The indoor units 12 are installed at the respective installation positions Q in the space α (FIG. 2). The short-range wireless communication device 13 performs a short-range wireless communication with the other short-range wireless communication devices 13, the anchor terminal 14, or the terminal device 30. The short-range wireless communication devices 13 are provided corresponding to the respective indoor units 12. Further, the short-range wireless communication device 13 may be built in the indoor unit 12 or may be installed on a ceiling, or the like, near the indoor unit 12.

The outdoor unit 11, the indoor unit 12, and the short-range wireless communication device 13 include an outdoor control unit 111, an indoor control unit 121 (121a to 121c), and a short-range wireless communication control unit 131 (131a to 131c), respectively. The outdoor control unit 111, the indoor control unit 121, and the short-range wireless communication control unit 131 each include a CPU, a memory, a communication interface, and the like, which are not illustrated, and is connected via a dedicated communication line.

### (2-1) Outdoor Control Unit

The outdoor control unit 111 includes a storage unit 112, a processing unit 113, and a communication unit 114. The storage unit 112 stores various types of information and includes a nonvolatile memory, a volatile memory, and the like. For example, the storage unit 112 stores programs for executing various functions of the air conditioner 10 (the outdoor unit 11, the indoor unit 12, and the short-range wireless communication device 13) and various types of information for executing the programs.

The processing unit 113 includes a CPU, a cache memory, and the like, and executes various types of information processing. The processing unit 113, for example, transmits and receives various signals, and the like, to and from the indoor control unit 121 (121a to 121c) or the short-range wireless communication control unit 131 (131a to 131c) via a dedicated communication line. The processing unit 113, for example, transmits and receives various types of information, and the like, to and from the management device 20 via the communication unit 114.

The communication unit 114 is a communication interface for performing communications with an external network including the communication network NW. The communication unit 114 may include a device such as a router, which is not illustrated.

### (2-2) Indoor Control Unit

The indoor control unit 121 (121a to 121c) includes a storage unit 122 (122a to 122c) and a processing unit 123 (123a to 123c). The storage unit 122 stores various types of information and includes a nonvolatile memory, a volatile memory, and the like. For example, the storage unit 122 stores programs for executing various functions of the indoor unit 12 and various types of information for executing the programs. Furthermore, the storage unit 122 stores the identification information unique to each of the indoor units 12. The identification information is, for example, a device ID, a MAC address, a name, or the like, of the indoor unit 12.

The processing unit 123 includes a CPU, a cache memory, and the like, and executes various types of information processing. The processing unit 123 transmits and receives various signals, and the like, to and from the outdoor control unit 111 or the short-range wireless communication control unit 131 via, for example, a dedicated communication line.

### (2-3) Short-range Wireless Communication Control Unit

The short-range wireless communication control unit 131 (131a to 131c) includes a storage unit 132 (132a to 132c), a processing unit 133 (133a to 133c), and a short-range wireless communication unit 134 (134a to 134c). The storage unit 132 stores various types of information and includes a nonvolatile memory, a volatile memory, and the like. For example, the storage unit 132 stores programs for executing various functions of the short-range wireless communication device 13 and various types of information for executing the programs. Further, the storage unit 132 previously stores the identification information of the indoor unit 12 corresponding to the short-range wireless communication device 13.

The processing unit 133 includes a CPU, a cache memory, and the like, and executes various types of information processing. The processing unit 133 transmits and receives various signals, and the like, to and from the outdoor control unit 111 or the indoor control unit 121 via, for example, a dedicated communication line. For example, the processing unit 133 performs a short-range wireless communication with the other short-range wireless communication devices 13 or the terminal device 30 via the short-range wireless communication unit 134.

The short-range wireless communication unit 134 includes a short-range wireless transmission unit 135 (135a to 135c) and a short-range wireless reception unit 136 (136a to 136c). The short-range wireless transmission unit 135 performs a short-range wireless communication to transmit the signal including the identification information of the corresponding indoor unit 12. For example, the short-range wireless communication is the BLE (Bluetooth (registered trademark) Low Energy) communication and may be compatible with iBeacon (registered trademark) as a communication standard. The short-range wireless reception unit 136 receives the signal including the identification information from the other short-range wireless communication devices 13. The signal including the identification information is received with a higher radio wave intensity as the other short-range wireless communication device 13 is closer. The identification information (signal) received by the short-range wireless reception unit 136 is transmitted to the outdoor control unit 111 via the dedicated communication line in association with the radio wave intensity at which the identification information is received.

The outdoor control unit 111 transmits the identification information received by the short-range wireless reception unit 136 and the information on the radio wave intensity to the management device 20 via the communication unit 114.

### (3) Anchor Terminal

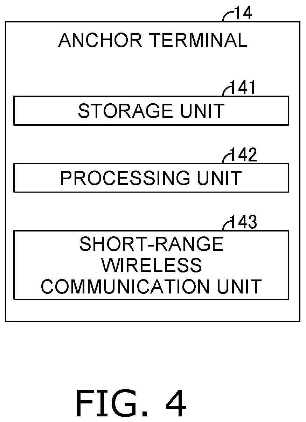

FIG. 4 is a schematic diagram illustrating the anchor terminal 14. For example, the anchor terminal 14 is a terminal device having the function similar to that of the short-range wireless communication device 13 included in the air conditioner 10. The anchor terminal 14 includes a storage unit 141, a processing unit 142, and a short-range wireless communication unit 143. The storage unit 141 stores various types of information and includes a nonvolatile memory, a volatile memory, and the like. For example, the storage unit 141 stores programs for executing various functions of the anchor terminal 14 and various types of information for executing the programs. Furthermore, the storage unit 141 previously stores the identification information of the anchor terminal 14.

The processing unit 142 includes a CPU, a cache memory, and the like, and executes various types of information processing. For example, the processing unit 142 performs a short-range wireless communication with the short-range wireless communication device 13 included in the air conditioner 10 via the short-range wireless communication unit 143.

The short-range wireless communication unit 143 may perform a short-range wireless communication to transmit at least the signal including the identification information of the anchor terminal 14.Additionally, the short-range wireless communication unit 143 of the anchor terminal 14 may be capable of transmitting and receiving the signal including the identification information in the same manner as the short-range wireless communication device 13 included in the air conditioner 10 or may be a device capable of only transmission.

The anchor terminal 14 may be connected to the air conditioner 10, the management device 20, and the terminal device 30 via the communication network NW.

### (4) Management Device

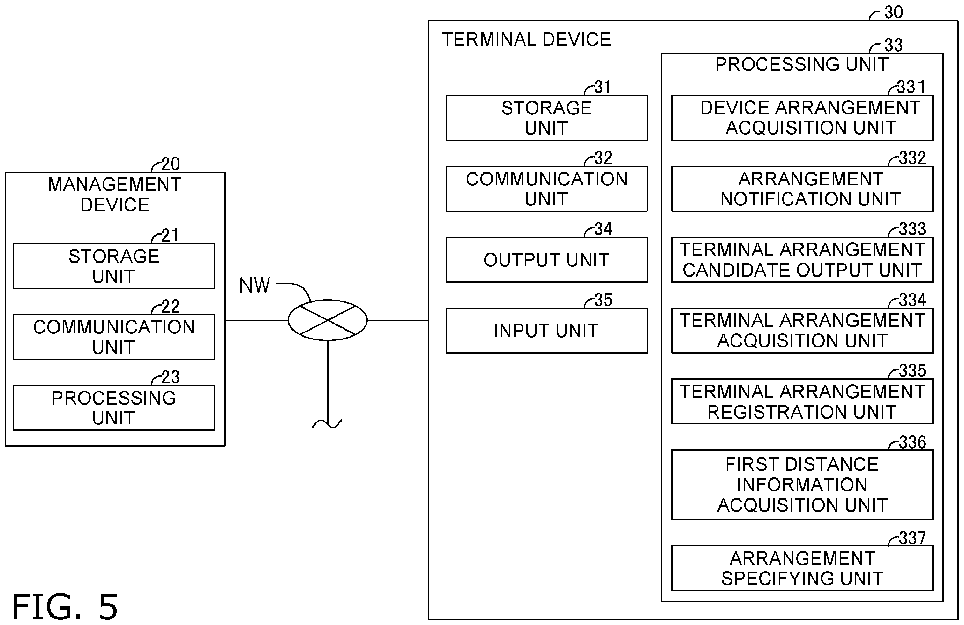

The management device 20 illustrated in FIG. 5 is connected to at least each of the air conditioners 10 and the terminal device 30 via the communication network NW. The management device 20 is, for example, a supercomputer, a workstation, a personal computer, a tablet device, a smartphone, or the like. Further, for example, the management device 20 may be configured by connecting a plurality of computers or devices via a network.

The management device 20 includes a storage unit 21, a communication unit 22, and a processing unit 23.

### (4-1) Storage Unit

The storage unit 21 stores various types of information and includes a ROM, a RAM and/or a hard disk, and the like. Here, the storage unit 21 stores programs for executing various functions of the management device 20 and various types of information for executing the programs. The storage unit 21 previously stores the drawing information β.

Further, the storage unit 21 stores various types of information received from the air conditioner 10 or the terminal device 30. The information stored in the storage unit 21 may be updated as appropriate.

### (4-2) Communication Unit

The communication unit 22 is a communication interface for performing a communication with an external network including the communication network NW. For example, the communication unit 22 receives the identification information and the information on the radio wave intensity from the air conditioner 10 (the outdoor control unit 111). Further, the communication unit 22 transmits the identification information and the information on the radio wave intensity or the information of the drawing information β stored in the storage unit 21 to the terminal device 30. Moreover, the communication unit 22 receives, from the terminal device 30, the arrangement registration information in which the arrangement of the air conditioners 10 is associated with the identification information.

### (4-3) Processing Unit

The processing unit 23 includes a CPU, a cache memory, and the like, and executes various types of information processing. For example, the processing unit 23 transmits and receives various types of information via the communication network NW.

### (5) Terminal Device

The terminal device 30 illustrated in FIG. 5 is connected to the management device 20 via the communication network NW. For example, the terminal device 30 is a personal computer, a tablet device, a smartphone, or the like. The terminal device 30 includes a storage unit 31, a communication unit 32, a processing unit 33, an output unit 34, and an input unit 35.

### (5-1) Storage Unit

The storage unit 31 stores various types of information and includes a ROM, a RAM, and/or a hard disk, etc. Here, the storage unit 31 stores programs for executing various functions of the management device 20 and various types of information for executing the programs.

Further, the storage unit 31 stores various types of information received from the air conditioner 10, the terminal device 30, and the like. The information stored in the storage unit 31 may be updated as appropriate.

### (5-2) Communication Unit

The communication unit 32 is a communication interface for performing a communication with an external network including the communication network NW. For example, the communication unit 32 receives the identification information and the information on the radio wave intensity or the drawing information β from the management device 20. The information received by the communication unit 32 is stored as appropriate in a proper area of the storage unit 31.

### (5-3) Processing Unit

The processing unit 33 includes a CPU, a cache memory, and the like, and executes various types of information processing. The processing unit 33 includes a device arrangement acquisition unit 331, an arrangement notification unit 332, a terminal arrangement candidate output unit 333, a terminal arrangement acquisition unit 334, the terminal arrangement registration unit 335, a first distance information acquisition unit 336, and an arrangement specifying unit 337.

### (5-3-1) Device Arrangement Acquisition Unit

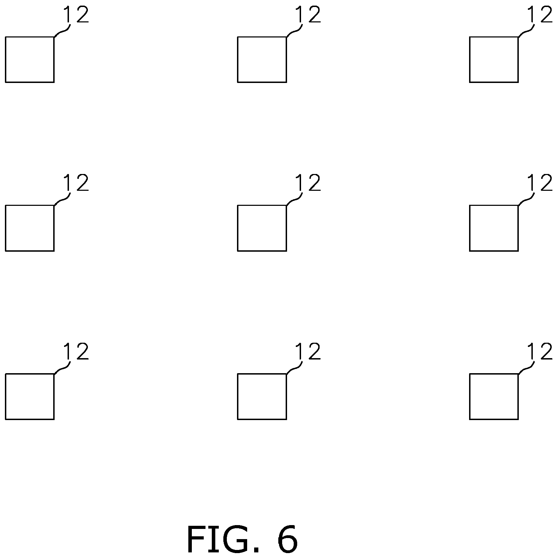

The device arrangement acquisition unit 331 acquires device arrangement information based on the drawing information β stored in the storage unit 31. The device arrangement information is information indicating the arrangement of the indoor units 12 in the space α. For example, the device arrangement acquisition unit 331 acquires the arrangement illustrated in FIG. 6 as the arrangement of the indoor units 12 in the space α based on the drawing information β (FIG. 2) received via the communication unit 32 and stored in the storage unit 31. Here, the arrangement of the indoor units 12 acquired by the device arrangement acquisition unit 331 is information indicating the relation of the arrangement of the indoor units 12 having no identification information. The device arrangement information acquired by the device arrangement acquisition unit 331 is stored in a proper area of the storage unit 31.

### (5-3-2) Arrangement Notification Unit

The arrangement notification unit 332 determines whether there is a symmetric axis and/or a symmetric point in the arrangement of the indoor units 12 in a plan view of the space α based on the device arrangement information acquired by the device arrangement acquisition unit 331 and notifies a determination result via the output unit 34. For example, based on the information illustrated in FIG. 6 as the device arrangement information acquired by the device arrangement acquisition unit 331, the arrangement notification unit 332 determines that there is a symmetric axis and/or a symmetric point in the arrangement. Further, the arrangement notification unit 332 notifies a determination result via the output unit 34. Alternatively, when it is determined that there is no symmetric axis and/or no symmetric point in the arrangement, the arrangement notification unit 332 notifies a determination result via the output unit 34.

Furthermore, the arrangement notification unit 332 may determine whether there is a symmetric axis and/or a symmetric point in the arrangement of the anchor terminal 14 and the indoor units 12 based on the anchor terminal 14 registered by the terminal arrangement registration unit 335 and the device arrangement information acquired by the device arrangement acquisition unit 331 and notify a determination result via the output unit 34.

### (5-3-3) Terminal Arrangement Candidate Output Unit

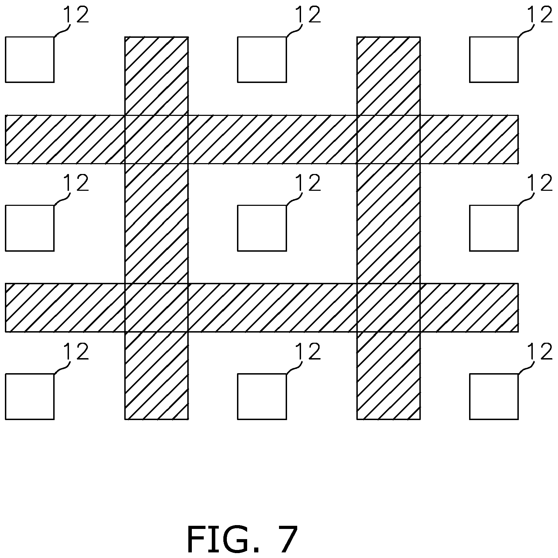

When the arrangement notification unit 332 determines that there is a symmetric axis and/or a symmetric point in the arrangement of the indoor units 12 (the installation positions Q of the indoor units 12), the terminal arrangement candidate output unit 333 calculates an arrangement candidate for the anchor terminal 14 and displays it on the output unit 34. The arrangement candidate for the anchor terminal 14 is determined such that there is no symmetric axis and/or no symmetric point in the arrangement of the anchor terminal 14 and the indoor units 12 (the installation positions Q of the indoor units 12). For example, the terminal arrangement candidate output unit 333 outputs, to the output unit 34, arrangement candidates (hatched areas) of the anchor terminal 14 as illustrated in FIG. 7.

### (5-3-4) Terminal Arrangement Acquisition Unit

The terminal arrangement acquisition unit 334 acquires the arrangement of the anchor terminal 14 input from the input unit 35. The arrangement of the anchor terminal 14 is input based on the information displayed on the output unit 34 by the terminal arrangement candidate output unit 333.

### (5-3-5) Terminal Arrangement Registration Unit

The terminal arrangement registration unit 335 registers the arrangement of the anchor terminal 14 based on the information about the arrangement of the anchor terminal 14 acquired by the terminal arrangement acquisition unit 334. For example, the terminal arrangement registration unit 335 registers the arrangement of the anchor terminal 14 on the drawing information β as illustrated in FIG. 2. The information about the arrangement of the anchor terminal 14 registered by the terminal arrangement registration unit 335 is stored in a proper area of the storage unit 31.

### (5-3-6) First Distance Information Acquisition Unit

The first distance information acquisition unit 336 acquires first distance information based on the identification information and the information on the radio wave intensity received by the communication unit 32. Here, the information on the radio wave intensity is, in other words, information about the distance between any two of the indoor units 12. The first distance information is information in which the information about the distance between any two of the indoor units 12 is associated with the identification information and is, for example, the information described in Table 1. The first distance information acquired by the first distance information acquisition unit 336 is stored in a proper area of the storage unit 31. Further, the first distance information by the first distance information acquisition unit 336 preferably further includes information based on the communication intensity and the communication time by an ultrasonic communication and the direction in which a radio wave or a sound wave arrives.

**[Table 1]**

| IDENTIFICATION INFORMATION | RADIO WAVE INTENSITY |
|---|---|
| A001-A002 | 100 |
| A001-B001 | 100 |
| A001-B002 | 150 |
| A001-A003 | × (NOT RECEIVABLE) |
| ... | ... |

### (5-3-7) Arrangement Specifying Unit

The arrangement specifying unit 337 specifies the arrangement and the identification information of the indoor units 12 in the space α based on the device arrangement information stored in the storage unit 31, the arrangement information on the anchor terminal 14, and the first distance information. Specifically, the correspondence between the arrangement relation of the indoor units 12 and the anchor terminal 14 and the first distance information is compared, and the arrangement and the identification information of the indoor units 12 in the space α are specified. The arrangement and the identification information of the indoor units 12 specified by the arrangement specifying unit 337 are stored in a proper area of the storage unit 31 and transmitted to the management device 20 via the communication unit 32 as the arrangement registration information.

### (5-4) Output Unit

The output unit 34 is used to display various types of information and includes various displays, speakers, and the like. A serviceperson, or the like, may refer to various types of information displayed on the output unit 34 to perform a registration work.

### (5-5) Input Unit

The input unit 35 is used to input various types of information and includes a mouse, a keyboard, a touch panel, and the like. A serviceperson, or the like, may input various types of information via the input unit 35.

### (6) Process in Arrangement Candidate Output System

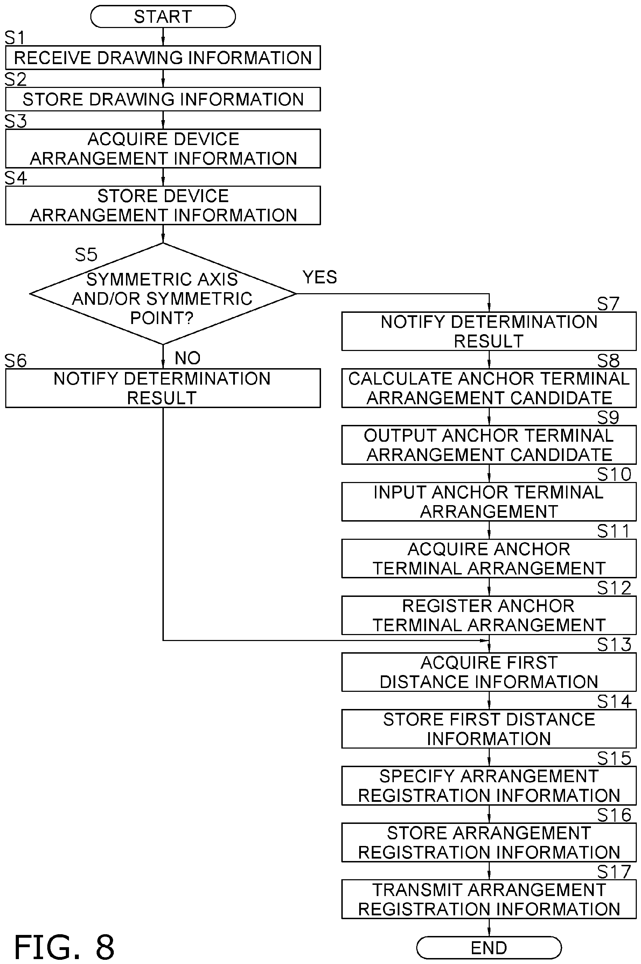

FIG. 8 is a flowchart illustrating the flow of a process in the arrangement specifying system 1 according to the present embodiment. The arrangement specifying system 1 according to the present embodiment specifies the arrangement of each of the air conditioners 10 installed in the space α illustrated as the drawing information β in FIG. 2.

Furthermore, here, the state is such that the indoor units 12 are installed in the space α by the serviceperson, or the like. The short-range wireless communication device 13 corresponding to the indoor unit 12 stores the identification information of the indoor unit 12 and performs a short-range wireless communication to transmit the signal including the identification information of the indoor unit 12 at a predetermined interval. The management device 20 stores information of the drawing information β.

First, the communication unit 32 of the terminal device 30 receives the drawing information β from the management device 20 via the communication network NW (Step S1). The drawing information β received by the terminal device 30 is stored in a proper area of the storage unit 31 (Step S2).

The device arrangement acquisition unit 331 of the processing unit 33 of the terminal device 30 acquires the device arrangement information based on the drawing information β stored in the storage unit 31 (Step S3). The device arrangement information is information indicating the arrangement of the indoor units 12 (the air conditioners 10) in the space α. The device arrangement information acquired by the device arrangement acquisition unit 331 is stored in a proper area of the storage unit 31 (Step S4).

The arrangement notification unit 332 determines whether there is a symmetric axis and/or a symmetric point in the arrangement of the indoor units 12 (the installation positions Q of the indoor units 12) based on the device arrangement information acquired by the device arrangement acquisition unit 331 (Step S5). When there is no symmetric axis and/or no symmetric point in the arrangement of the indoor units 12 (the installation positions Q of the indoor units 12) (No), the arrangement notification unit 332 notifies a determination result via the output unit 34 (Step S6) and proceeds to Step 13. Conversely, when there is a symmetric axis and/or a symmetric point in the arrangement of the indoor units 12 (the installation positions Q of the indoor units 12) (Yes), the arrangement notification unit 332 notifies a determination result via the output unit 34 (Step S7) and proceeds to Step S8.

At Step S8, the terminal arrangement candidate output unit 333 calculates an arrangement candidate for the anchor terminal 14. The terminal arrangement candidate output unit 333 calculates an arrangement candidate for the anchor terminal 14 based on the device arrangement information such that there is no symmetric axis and/or no symmetric point in the arrangement of the anchor terminal 14 and the indoor units 12. The arrangement candidate for the anchor terminal calculated by the terminal arrangement candidate output unit 333 is output via the output unit 34 (Step S9). The serviceperson, or the like, refers to the arrangement candidate for the anchor terminal 14 output via the output unit 34 and determines the arrangement of the anchor terminal 14. The input unit 35 receives an input of the arrangement of the anchor terminal 14 determined by the serviceperson, or the like (Step S10).

The terminal arrangement acquisition unit 334 acquires the arrangement of the anchor terminal 14 input from the input unit 35 (Step S11). The terminal arrangement registration unit 335 registers the arrangement of the anchor terminal 14 (stores it in a proper area of the storage unit 31) based on the information about the arrangement of the anchor terminal 14 acquired by the terminal arrangement acquisition unit 334 (Step S12).

The first distance information acquisition unit 336 acquires the first distance information based on the identification information and the information on the radio wave intensity received by the communication unit 32 (Step S13). The first distance information acquired by the first distance information acquisition unit 336 is each stored in a proper area of the storage unit 31 (Step S14).

The arrangement specifying unit 337 specifies the arrangement and the identification information (arrangement registration information) of the indoor units 12 in the space α based on the device arrangement information stored in the storage unit 31, the arrangement information of the anchor terminal 14, and the first distance information (Step S15). The information specified by the arrangement specifying unit 337 is stored in a proper area of the storage unit 31 (Step S16). Further, it is transmitted to the management device 20 via the communication unit 32 (Step S17). The management device 20 receives the arrangement registration information and stores it in the storage unit 21. Thus, the arrangement registration process by the arrangement specifying system 1 is completed.

### (7) Feature

(7-1)
The method for arranging the air conditioners 10 as devices described in the present disclosure is the method for arranging the n air conditioners 10 whose arrangement is specified by the arrangement specifying system 1. The arrangement specifying system 1 specifies the correspondence of the arrangement of the n air conditioners 10 on the drawing based on the information about the distance and the drawing information β. The information about the distance is the information about the distance of the any two air conditioners 10 among the n air conditioners 10 arranged with a predetermined arrangement. The drawing information β is information indicating the arrangement of the n air conditioners 10. According to the method for arranging the air conditioners 10, the n air conditioners 10 are arranged such that there is no symmetric axis and/or no symmetric point in the arrangement of the n air conditioners 10.

When the management device 20, or the like, manages the air conditioners 10, it is necessary to perform an arrangement specifying work to register, in the management device 20, the identification information of the air conditioners 10 (the indoor units 12) and the arrangement in association with each other (in other words, specify the arrangement of each of the air conditioners 10 in the space α). Conventionally, the arrangement specifying work has been performed by operating indoor units using remote controllers, or the like, corresponding to the indoor units after the installation of the indoor units and thus identifying each of the indoor units. However, the conventional method requires a large number of man-hours for the arrangement specifying work and many hours to complete the work.

With the above-described configuration, the arrangement specifying system 1 described in the present disclosure may reduce the man-hours for the arrangement specifying work and efficiently complete the work. In particular, as there is no work such as operating the indoor unit using the remote controller, or the like, by a worker, it is possible to reduce the burden on a serviceperson, or the like, who conducts the work.

Further, as disclosed in Patent Literature 1 (Japanese Unexamined Patent Publication No. 2017-32469), in a system that specifies the arrangement of a plurality of indoor units based on the information about the distance based on a wireless communication of an indoor unit and the information on a drawing of a space, the flexibility in a rotation direction and a reverse direction of the arrangement of the indoor units is not fixed, and it may be difficult to specify the arrangement of the indoor units.

In the arrangement specifying system 1 described in the present disclosure, the n air conditioners 10 are arranged such that there is no symmetric axis and/or no symmetric point in the arrangement of the n air conditioners 10 in a plan view of the space α so that the arrangement of the air conditioners 10 may be easily specified.

(7-2)
The method for arranging the anchor terminal 14 described in the present disclosure is the arrangement method used in the arrangement specifying system 1 that specifies the correspondence of the arrangement of the n air conditioners 10 on the drawing based on the information about the distance and the drawing information β. The information about the distance is information about the distance of the anchor terminal 14 and the any two air conditioners 10 among the n air conditioners 10 arranged with the predetermined arrangement. The drawing information β indicates the arrangement of the anchor terminal 14 and the n air conditioners 10. The anchor terminal 14 is arranged with an arrangement such that there is no symmetric axis and/or no symmetric point in the arrangement of the anchor terminal 14 and the n air conditioners 10.

Thus, it is possible to easily specify the arrangement of the air conditioners 10 by using the arrangement specifying system 1.

(7-3)
In the method for arranging the anchor terminal 14 described in the present disclosure, the anchor terminal 14 and the n air conditioners 10 may perform a wireless communication or ultrasonic communication with each other. The information about the distance includes the information based on the communication intensity and the communication time by the wireless communication or ultrasonic communication and the direction in which the radio wave or sound wave arrives.

(7-4)
The terminal device 30 as an arrangement candidate output system described in the present disclosure outputs an arrangement candidate for arranging the anchor terminal 14. The terminal device 30 is used in the arrangement specifying system 1. The arrangement specifying system 1 specifies the correspondence of the arrangement of the n air conditioners 10 on the drawing based on the information about the distance and the drawing information β. The information about the distance is information about the distance of the anchor terminal 14 and any two air conditioners 10 among the n air conditioners 10 arranged with the predetermined arrangement. The drawing information β indicates the arrangement of the anchor terminal 14 and the n air conditioners 10. The terminal device 30 includes the device arrangement acquisition unit 331 and the terminal arrangement candidate output unit 333. The device arrangement acquisition unit 331 acquires the device arrangement information indicating the arrangement of the n air conditioners 10. Based on the device arrangement information, the terminal arrangement candidate output unit 333 outputs a candidate for arranging the anchor terminal 14 such that there is no symmetric axis and/or no symmetric point in the arrangement of the anchor terminal 14 and the n air conditioners 10.

Thus, it is possible to specify the arrangement of the anchor terminal 14 and the n air conditioners 10 with which the arrangement of the air conditioners 10 may be easily specified by using the arrangement specifying system 1.

(7-5)
The terminal device 30 as an anchor terminal registration system described in the present disclosure registers the anchor terminal 14 used in the arrangement specifying system 1 that specifies the correspondence of the arrangement of the n air conditioners 10 on the drawing based on the information about the distance and the drawing information β. The information about the distance is information about the distance of the anchor terminal 14 and the any two air conditioners 10 among the n air conditioners 10 arranged with the predetermined arrangement. The drawing information β indicates the arrangement of the anchor terminal 14 and the n air conditioners 10. The terminal device 30 includes the device arrangement acquisition unit 331, the terminal arrangement acquisition unit 334, and the terminal arrangement registration unit 335. The device arrangement acquisition unit 331 acquires the device arrangement information indicating the arrangement of the n air conditioners 10. The terminal arrangement candidate output unit 333 displays the arrangement of the n air conditioners 10 based on the device arrangement information. The terminal arrangement acquisition unit 334 adds the arrangement of the anchor terminal 14 to the device arrangement displayed by the terminal arrangement candidate output unit 333. The terminal arrangement registration unit 335 registers the anchor terminal 14 added by the terminal arrangement acquisition unit 334 in the arrangement specifying system 1.

Thus, it is possible to register, in the arrangement specifying system 1, the arrangement of the anchor terminal 14 with which the arrangement of the air conditioners 10 may be easily specified by using the arrangement specifying system 1.

(7-6)
The terminal device 30 described in the present disclosure further includes the arrangement notification unit 332. The arrangement notification unit 332 notifies the user when there is a symmetric axis and/or a symmetric point in the arrangement of the n air conditioners 10 and the anchor terminal 14 including the arrangement of the air conditioners 10 and the arrangement of the anchor terminal 14 registered by the terminal arrangement registration unit 335.

(7-7)
The terminal device 30 described in the present disclosure further includes the arrangement notification unit 332. The arrangement notification unit 332 notifies the user when there is no symmetric axis and/or no symmetric point in the arrangement of the n air conditioners 10 and the anchor terminal 14 including the arrangement of the air conditioners 10and the arrangement of the anchor terminal 14 added by the terminal arrangement acquisition unit 334.

(7-8)
The arrangement specifying system 1 described in the present disclosure includes the n (n ≥ 3) air conditioners 10, the device arrangement acquisition unit 331, the terminal arrangement acquisition unit 334, the first distance information acquisition unit 336, and the arrangement specifying unit 337. The n air conditioners 10 are arranged such that there is no symmetric axis and/or no symmetric point. The device arrangement acquisition unit 331, the terminal arrangement acquisition unit 334, and the first distance information acquisition unit 336 acquire the information (the first distance information) about the distance of the any two air conditioners 10 among the n air conditioners 10 and the drawing information β indicating the arrangement of the n air conditioners 10. The arrangement specifying unit 337 specifies the arrangement of the n air conditioners 10 based on the information about the distance of the air conditioners 10 and the drawing information β indicating the arrangement of the n air conditioners 10 acquired by the device arrangement acquisition unit 331, the terminal arrangement acquisition unit 334, and the first distance information acquisition unit 336.

(8)
Although the embodiment of the present disclosure has been described above, it is understood that various changes may be made to forms and details without departing from the spirit and scope of the present disclosure described in claims.

### REFERENCE SIGNS LIST

- 1: ARRANGEMENT SPECIFYING SYSTEM
- 10: AIR CONDITIONER (DEVICE)
- 14: ANCHOR TERMINAL
- 30: ARRANGEMENT CANDIDATE OUTPUT SYSTEM, ANCHOR TERMINAL REGISTRATION SYSTEM, TERMINAL DEVICE
- 331: DEVICE ARRANGEMENT ACQUISITION UNIT
- 332: ARRANGEMENT NOTIFICATION UNIT
- 333: TERMINAL ARRANGEMENT CANDIDATE OUTPUT UNIT
- 334: TERMINAL ARRANGEMENT ACQUISITION UNIT
- 335: TERMINAL ARRANGEMENT REGISTRATION UNIT
- 336: FIRST DISTANCE INFORMATION ACQUISITION UNIT
- 337: ARRANGEMENT SPECIFYING UNIT
- β: DRAWING INFORMATION

### CITATION LIST

### PATENT LITERATURE

Patent Literature 1: Japanese Unexamined Patent Publication No. 2017-32469

## Claims

1. A method for arranging n devices (10) whose arrangement is specified by an arrangement specifying system (1) that specifies a correspondence of an arrangement of the n devices (10) on a drawing based on information about a distance of any two devices (10) among the n devices (10) and drawing information (β) indicating the arrangement of the n devices (10),
the method for arranging the n devices (10) comprising arranging the n devices (10) such that there is no symmetric axis and/or no symmetric point in the arrangement of the n devices (10).

2. A method for arranging an anchor terminal (14) used for an arrangement specifying system (1) that specifies a correspondence of an arrangement of n devices (10) on a drawing based on information about a distance of the anchor terminal (14) and any two of the n devices (10) and drawing information (β) indicating an arrangement of the anchor terminal (14) and the n devices (10),
the method for arranging the anchor terminal comprising arranging the anchor terminal (14) such that there is no symmetric axis and/or no symmetric point in the arrangement of the anchor terminal (14) and the n devices (10).

3. The method for arranging the anchor terminal (14) according to claim 2, wherein
the anchor terminal (14) and the n devices (10) are capable of performing a wireless communication or ultrasonic communication with each other, and
the information about the distance includes information based on a communication intensity and a communication time by the wireless communication or the ultrasonic communication and a direction in which a radio wave or a sound wave arrives.

4. An arrangement candidate output system (30) that is used for an arrangement specifying system (1) that specifies a correspondence of an arrangement of n devices (10) on a drawing based on information about a distance of an anchor terminal (14) and any two of the n devices (10) and drawing information (β) indicating an arrangement of the anchor terminal (14) and the n devices (10) and that outputs an arrangement candidate for arranging the anchor terminal (14),
the arrangement candidate output system (30) comprising:
a device arrangement acquisition unit (331) that acquires device arrangement information indicating the arrangement of the n devices (10); and
a terminal arrangement candidate output unit (333) that outputs a candidate for arranging the anchor terminal (14) such that there is no symmetric axis and/or no symmetric point in the arrangement of the anchor terminal (14) and the n devices (10) based on the device arrangement information.

5. An anchor terminal registration system (30) that registers an anchor terminal (14) used for an arrangement specifying system (1) that specifies a correspondence of an arrangement of n (n ≥ 2) devices (10) on a drawing based on information about a distance of the anchor terminal (14) and any two of the n devices arranged with a predetermined arrangement and drawing information (β) indicating an arrangement of the anchor terminal (14) and the n devices (10),
the anchor terminal registration system (30) comprising:
a device arrangement acquisition unit (331) that acquires device arrangement information indicating the arrangement of the n devices (10);
a terminal arrangement acquisition unit (334) that adds the arrangement of the anchor terminal (14) to the device arrangement information acquired by the device arrangement acquisition unit (331); and
a terminal arrangement registration unit (335) that registers the anchor terminal (14) added by the terminal arrangement acquisition unit (334) in the arrangement specifying system (1).

6. The anchor terminal registration system (30) according to claim 5, further comprising:
an arrangement notification unit (332) that notifies a user when there is a symmetric axis and/or a symmetric point in the arrangement of the n devices (10) and the anchor terminal (14) including the device arrangement information and the arrangement of the anchor terminal (14) registered by the terminal arrangement registration unit (335).

7. The anchor terminal registration system (30) according to claim 5, further comprising:
an arrangement notification unit (332) that notifies a user when there is no symmetric axis and/or no symmetric point in the arrangement of the n devices (10) and the anchor terminal (14) including the device arrangement information and the arrangement of the anchor terminal (14) registered by the terminal arrangement registration unit (335).

8. An arrangement specifying system (1) comprising:
n (n ≥ 3) devices (10) arranged such that there is no symmetric axis and/or no symmetric point;
an acquisition unit (331, 334, 336) that acquires information about a distance of the any two devices (10) among the n devices (10) and drawing information (β) indicating an arrangement of the n devices (10); and
a specifying unit (337) that specifies the arrangement of the n (n ≥ 3) devices based on the information about the distance of the devices (10) acquired by the acquisition unit and the drawing information (β) indicating the arrangement of the n devices (10).
